# EUROPÄISCHE PATENTANMELDUNG

(11) **EP 1 471 623 A1**
(43) Veröffentlichungstag der Anmeldung: **27.10.2004**
(21) Anmeldenummer: 04009277.7
(22) Anmeldetag: 20.04.2004
(51) Int. Cl.: H02K 15/04, H02K 15/06, H02K 15/08

(54) **Verfahren und Vorrichtung zur Herstellung einer eisenlosen Stator-Wicklung**

(30) Priorität: 24.04.2003 DE 10318702
(71) Anmelder: WILO AG, 44263 Dortmund (DE)
(72) Erfinder: Dreihaus, Uwe, 59067 Hamm (DE); Heese, Thomas, 44263 Dortmund (DE); Kech, Hansjürgen, 58313 Herdecke (DE)
(74) Vertreter: COHAUSZ DAWIDOWICZ HANNIG & PARTNER

(57) **Zusammenfassung**

Die Erfindung betrifft ein Verfahren zur Herstellung einer eisenlosen Stator-Wicklung mit mehreren Spulenwicklungen (5) für insbesondere bürstenlose Elektromotoren, bei dem jede Spulenwicklung (5) durch mehrfache Wicklung eines Drahtes in einer Ebene im wesentlichen senkrecht zur späteren Achse (A) der Stator-Wicklung um eine zumindest teilweise in/an einem Wickeldorn (3), insbesondere entfernbar angeordnete Spulenaufnahme (4) hergestellt wird, ein Formzug erfolgt, bei dem die gewickelten Spulen (5) mit dem Wickeldorn (3), insbesondere im wesentlichen senkrecht zur Wickelebene durch einen Formring (7) gezogen werden, wobei durch den Formring (7) die einzelnen Spulenwickel (5) in ihrer Orientierung ganz oder zumindest in einem Teilbereich umgeklappt und aufeinander zubewegt werden und wobei die so erhaltene Stator-Wicklung wird in ihrer Form fixiert wird. Die Erfindung betrifft weiterhin die Verwendung einer Kontaktiereinheit (1) zur Aufnahme von Drahtenden mehrerer Stator-Spulenwicklungen (5) als Wickeldorn (3), mittels dem mehrere Stator-Spulenwicklungen (5) durch einen Formring (7) in eine gewünschte Stator-Wicklungsform ziehbar sind und eine Vorrichtung zur Herstellung einr eisenlosen Stator-Wicklung.

## Beschreibung

Die Erfindung betrifft ein Verfahren sowie eine Vorrichtung zur Herstellung einer eisenlosen Stator-Wicklung mit mehreren Spulenwicklungen für Elektromotoren, insbesondere bürstenlose Elektromotoren.

Insbesondere bei der Herstellung von Asynchronmotorwicklungen ist die sogenannte Einziehtechnik bekannt. Bei dieser Technik werden die Motorwicklungen des späteren Stators auf einem sogenannten Einziehstern bzw. Wickeldorn mit einem sogenannten Flyersystem und zugehörigen Wickelschablonen gewickelt, um dann in einem weiteren Verfahrensschritt die Spulenwicklungen in ein Statorlamellenpaket einzuziehen. Nach diesem Einziehen werden in einem weiteren Verfahrensschritt die Enden der Wicklungsdrähte sortiert und in eine entsprechende Kontaktiereinheit eingesetzt. Anschließend kann die Wicklung z.B. in einem Verbackungsprozess mittels Formschalen in eine gewünschte Form gebracht werden.

Bei diesem bekannten Verfahren dient das Statorlamellenblechpaket, in welches die einzeinen Spulenwicklungen eingezogen werden, als formstabilisierendes Trägerelement.

Aufgabe der Erfindung ist es ein Verfahren und eine Vorrichtung bereitzustellen, mit denen auch eisenlose Stator-Wicklungen, sogenannte Luftspaltwicklungen, herstellbar sind. Mit derartigen Luftspaltwicklungen können besonders kleinbauende Elektromotoren hergestellt werden, beispielsweise elektronisch kommutierte Motoren.

Diese Aufgabe wird erfindungsgemäß dadurch gelöst, dass eine Vorrichtung zur Herstellung einer eisenlosen Stator-Wicklung wenigstens einen Wickeldorn umfasst, um den herum mehrere Spulenwicklungen in einem Winkel zur späteren Achse der Stator-Wicklung, insbesondere im wesentlichen in einer Ebene senkrecht zur späteren Achse der Stator-Wicklung wickelbar sind und weiterhin ein Formring umfasst, wobei durch eine Relativbewegung zwischen Formring und Wickeldorn der Wickeldorn, an dem die Spulenwicklungen über entsprechende Spulenaufnahmen aufgehängt sind, durch den Formring ziehbar ist, um so die einzelnen Spulenwickel in eine gewünschte Form zu ziehen, insbesondere in ihrer Orientierung ganz oder zumindest in einem Teilbereich umzuklappen und aufeinander zuzubewegen.

Mit einer derartigen erfindungsgemäßen Vorrichtung kann dementsprechend ein Verfahren zur Herstellung angewandt werden, bei dem in einem ersten Verfahrensschritt eine jede Spulenwicklung durch mehrfache Wicklung eines Drahtes in einem Winkel zur späteren Achse der Stator-Wicklung, insbesondere in einer Ebene senkrecht zur späteren Achse der Stator-Wicklung um eine zumindest teilweise in/an einem Wickeldorn, insbesondere entfernbar angeordnete Spulenaufnahme hergestellt wird. In diesem ersten Verfahrensschritt werden mehrere Spulenwicklungen, deren Anzahl an die Motorbedürfnisse angepasst ist, in typischer Weise regelmäßigem Winkelabstand um einen Wickeldorn herum angeordnet. Hierfür weist der Wickeldorn eine insbesondere entfernbar angeordnete Spulenaufnahme auf, die beispielsweise durch Formschablonen und/oder Formstifte gebildet sein kann. Mit einem bekannten Flyersystem zur Herstellung mehrerer Wicklungen eines Drahtes zur Ausbildung einer Spule wird somit jede der einzelnen Spulenwicklungen um die jeweils zumindest teilweise in oder an einem Wickeldorn angeordnete Spulenaufnahme hergestellt.

Über die jeweils einer Spulenwicklung zugeordnete Spulenaufnahme ist die betreffende Spulenwicklung an dem Wickeldorn befestigt, beispielsweise an diesen mittels der Spulenaufnahme eingehängt. Mittels dieser Befestigung ist sichergestellt, dass bei einer Bewegung des Wickeldornes die Spulenwicklung in der entsprechenden Richtung mitgezogen wird.

Gemäß dem zweiten Verfahrensschritt erfolgt ein Formzug, bei dem die gewickelten Spulen zusammen mit dem Wickeldorn durch einen Formring, insbesondere senkrecht zur Wickelebene, gezogen werden. Hierbei kommt es im Wesentlichen auf eine Relativbewegung zwischen dem Formring und dem Wickeldorn an, so dass zum einen in einer tatsächlich eingesetzten Vorrichtung ein beweglicher Wickeldorn durch einen ortsfesten Formring gezogen werden kann oder umgekehrt ein beweglicher Formring über einen ortsfesten Wickeldorn herübergeführt werden kann. Auch können beide Elemente gleichzeitig bewegt werden. Alle Varianten werden im Sinne dieser Erfindung als Formzug des Wickeldorns durch den Formring verstanden.

Durch den Formzug des Wickeldorns durch den Formring werden die einzelnen Spulenwickel mitgezogen und durch den Formring in eine gwünschte Form gezogen, insbesondere in ihrer Orientierung ganz oder zumindest in einem Teilbereich umgeklappt, wobei die einzelnen Spulenwickel aufeinander zubewegt werden und sich teilweise auch übereinander legen. Im Wesentlichen wird eine Umklappung dergestalt sein, dass die Orientierung der Spulenwickel sich um etwa 90 Grad ändert und die Spulenwickel sich über die Länge des Stators um die spätere Drehachse eines Rotors des Elektromotors anordnen.

In einem weiteren erfindungsgemäßen Verfahrensschritt wird die so erhaltene Stator-Wicklung in ihrer Form fixiert, wozu der Fachmann geeignete Maßnahmen ergreift. Beispielsweise kann es vorgesehen sein, dass die Stator-Wicklung als sogenannte Backlackwicklung ausgeführt wird, so dass durch ein thermisches Verbacken die Stator-Wicklung fixiert wird. Hierbei kann es vorgesehen sein, dass während des Verbackungsprozesses weitere Maßnahmen ergriffen werden, um die spätere gewünschte Form zu erreichen, wie beispielsweise durch den Einsatz von Formschalen.

Mit dem vorgenannten Verfahren, welches beispielsweise mit der genannten Vorrichtung eingesetzt werden kann, wird die Fertigung einer Luftspaltwicklung deutlich vereinfacht und die notwendigen Schritte zur Stator-Wicklungsherstellung reduziert.

In einer bevorzugten Weiterbildung des erfindungsgemäßen Verfahrens kann es vor und/oder nach dem Wickeln einer Spule, d.h. insbesondere vor dem oben genannten Formzug, die Drahtenden des Spulendrahtes automatisch in eine Kontaktiereinheit eingelegt werden, die insbesondere auf dem Wickeldorn angeordnet werden kann. Dieser Verfahrensschritt ermöglicht ein automatisches Sortieren der Wicklungsenden in einer Kontaktiereinheit, die für die spätere elektrische Kontaktierung des Stators vorgesehen ist. Das Einlegen eines ersten Drahtendes einer Spulenwicklung kann beispielsweise vor dem Wickeln der eigentlichen Spule erfolgen, insbesondere wenn ein Flyersystem zur Herstellung der Spulenwicklung verwendet wird. Nach dem Einfädeln des Drahtendes in die Kontaktiereinheit kann mittels des Flyersystems die entsprechende Spule z.B. über Wicklungsschablonen auf die zugeordnete Spulenaufnahme aufgewickelt werden, wonach bei der Beendigung der Spulenwicklung das zweite Drahtende automatisch in die Kontaktiereinheit eingefädelt wird. Dieser Verfahrensschritt kann sich sodann für jede weitere herzustellende Spulenwicklung wiederholen, bis dass alle einzelnen Spulenwicklungen separat hergestellt sind.

Um die oben genannte bevorzugte automatische Kontaktierung oder eine wie auch immer geartete spätere Kontaktierung durchzuführen, kann es, wie erwähnt, vorgesehen sein, dass die Kontaktiereinheit für den Herstellungsprozess der Stator-Wicklung auf dem Wickeldorn angeordnet wird. In einer besonders bevorzugten Ausführungsform kann es auch vorgesehen sein, dass die Kontaktiereinheit selbst den Wickeldorn bildet und somit insbesondere nach dem Formzug in der Stator-Wicklung verbleibt.

Zur Herstellung, d.h. Wicklung der einzelnen Spulenwickel, kann es weiterhin vorgesehen sein, dass vor dem eigentlichen Formzug die Spulenaufnahmen in bzw. an der Kontaktiereinheit bzw. dem Wickeldorn insbesondere entfernbar angeordnet sind.

So kann es beispielsweise vorgesehen sein, dass eine Kontaktiereinheit, sofern sie nicht selbst den Wickeldorn bildet, auf einem solchen positioniert wird, wobei während des Herstellungsprozesses der Wicklungen an oder in der Kontaktiereinheit bzw. dem Wickeldorn an definierten Positionen entsprechende Formstifte hervorstehen. Die einzelnen Statorspulen bzw. Stator-Wicklungen werden sodann um die entsprechenden Formstifte bzw. allgemein um die vorgesehenen Spulenaufnahmen des Wickeldorns bzw. der Kontaktiereinheit über die bereits genannten Flyersysteme gegebenenfalls unter Zuhilfenahme von Wickelschablonen gewickelt, um eine gewünschte Form einer Spulenwicklung zu erhalten.

Wie vorangehend erwähnt, wird sodann mittels des Wickeldorns bzw. einer Kontaktiereinheit die daran aufgehängten einzelnen Spulenwicklungen durch den Formring gezogen, wodurch die Spulenwicklungen in ihre später gewünschte Form umgeklappt werden. Aufgrund der Variabilität beispielsweise bei der Formgebung der Wickelschablonen bzw. der Anordnung der vorgesehenen Formstifte können mit dem erfindungsgemäßen Verfahren verschiedene Pol-, Strang- und Spulenzahlen realisiert werden. Durch die Formstifte bzw. die Wickelschablonen lassen sich darüber hinaus sehr einfach auch verschiedene Spulenschrittweiten und unterschiedliche Spulenlängenverhältnisse einstellen, die für die verschiedenen Wicklungen eines Stators auch unterschiedlich sein können, so dass sich z.B. für Ober- und Unterlagen des Stators unterschiedliche Wicklungen ergeben.

In einer weiterhin bevorzugten Fortbildung des erfindungsgemäßen Verfahrens kann es vorgesehen sein, dass während des Formzuges in Zugrichtung hinter dem Wickeldorn ein Formdorn angeordnet ist, um den sich herum die einzelnen Spulenwickel beim Formzug anordnen. Dieser Formdorn kann z.B. auch hohl ausgebildet sein und insbesondere koaxial über den Wickeldorn/Kontaktiereinheit geschoben werden.

Die Spulen werden dementsprechend mittels des Formringes umgeklappt und hierbei auf den Formdorn zubewegt, wobei sie gegebenenfalls an diesem zur Anlage kommen, so dass durch den Formdorn ein späterer innerhalb der Stator-Wicklungen freizuhaltender Raum für den Motorrotor realisiert wird. Hierbei kann gegebenenfalls in einer vorteilhaften Weiterbildung der Formdorn durch einen im Motor einzusetzenden Spalttopf oder ein Spaltrohr gebildet werden, wobei dieser/dieses insbesondere innerhalb der Stator-Wicklung verbleiben kann.

Nach dieser Formgebung durch den Formzug kann sowohl vor als auch nach der Fixierung der Stator-Wicklung der Formdorn und/oder der Wicklungsdorn und/oder die Spulenaufnahmen, beispielsweise die Formstifte, aus der gefertigten Stator-Wicklung herausgezogen werden. Gegebenenfalls verbleibt innerhalb der Stator-Wicklung die oben genannte Kontaktiereinheit, die entweder auf einem Wicklungsdorn aufgesetzt wurde oder selbst den Wicklungsdorn bildet.

Sofern bei der Formgebung ein Formdorn eingesetzt wurde, kann es vorgesehen sein, dass bei der Fixierung der Stator-Wicklung durch Verbacken dieses Verbacken bei eingesetztem Formdorn erfolgt, um während des Verbackungsprozesses die innere Ausnehmung der Stator-Wicklung garantiert beizubehalten. Sofern der Formdorn selbst durch einen Spalttopf/Spaltrohr gebildet wird, kann der Spalttopf/das Splatrohr auch innerhalb der Wicklung verbacken und mit dieser verbunden werden.

In einer weiteren bevorzugten Ausführung kann es ergänzend vorgesehen sein, dass während des Wicklungsvorganges, also insbesondere vor dem eigentlichen Formzug, eine weitere z.B. als Sensor dienende Spule gewickelt und anschließend zusammen mit den verschiedenen Statorspulen in Form gezogen wird. Eine solche zusätzliche Spule kann ebenfalls wie oben erwähnt, automatisch kontaktiert werden und beispielsweise dazu dienen während des Motorbetriebes Informationen beispielsweise durch induzierte Spannungen zu erhalten.

Besonders vorteilhaft bei dem erfindungsgemäßen Verfahren bzw. der erfindungsgemäßen Vorrichtung ist es, dass eine Kontaktiereinheit zur Aufnahme der Drahtenden mehrerer Statorspulenwicklungen erfindungsgemäß als ein Wickeldorn verwendet werden kann, mittels dem mehrere Statorspulenwicklungen durch einen Formring in eine gewünschte Stator-Wicklungsform ziehbar sind. Dies ist gemäß der Erfindung besonders vorteilhaft, da die derartige Kontaktiereinheit sowohl als Werkzeug zur Herstellung der Luftspaltwicklung dient als auch innerhalb der Wicklung verbleiben kann zur Kontaktierung der Drahtenden einer jeden einzelnen Spulenwicklung.

Ein Ausführungsbeispiel der Erfindung ist in der nachfolgenden Figur näher dargestellt.

Die einzige Figur zeigt in Aufsicht einen Wickeldorn 3, durch den hindurch sich als Spulenaufnahme mehrere Formstifte 4 erstrecken, wobei im vorliegenden Fall sechs Formstifte 4 vorgesehen sind, die innerhalb des Wickeldorns 3 an dessen äußerem Randbereich vorgesehen sind, wobei jeweils zwei innerhalb des Wickeldorns angeordnete Formstifte 4a einen Teil der für eine Spulenwicklung 5 vorgesehene Spulenaufnahme bzw. Wickelschablonen bilden. Einen weiteren Teil dieser Spulenaufnahme bzw. Wickelschablonen bilden ergänzend zugeordnete, außerhalb des Wickeldorns 3 liegende weitere Formstifte 4b, von denen jeweils weitere zwei Formstifte 4b einer herzustellenden Spulenwicklung 5 zugeordnet sind, so dass insgesamt für die Herstellung einer Spulenwicklung vier Formstifte 4a/4b vorgesehen sind. Die Anordnung und Entfernung der Formstifte 4a/4b definiert hierbei die spätere Form einer gewickelten Spule.

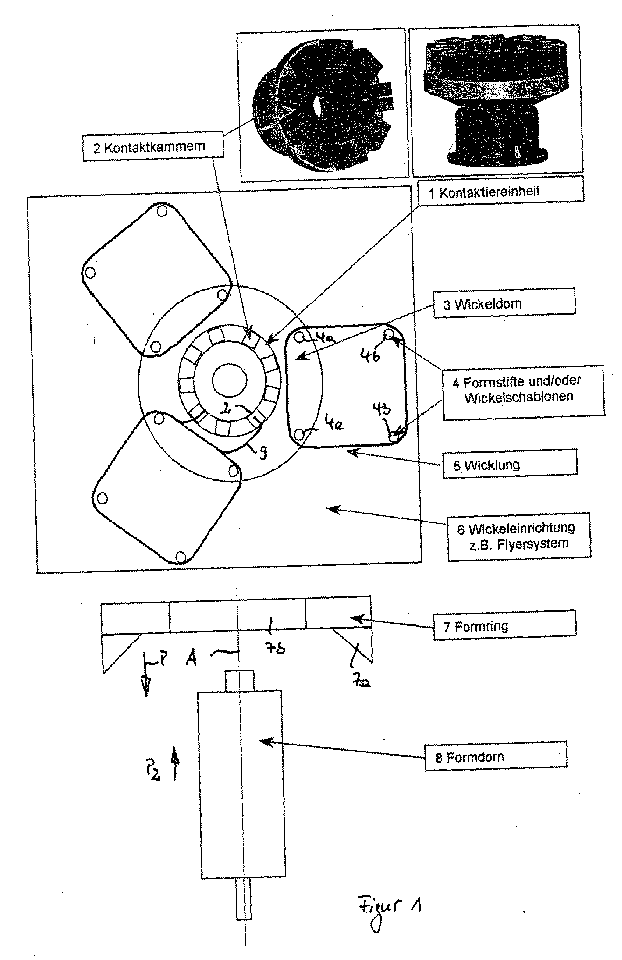

Gemäß der Figur 1 werden im vorliegenden Fall in einem ersten Verfahrensschritt drei Spulenwicklungen 5 in einer Ebene gewickelt, die im wesentlichen senkrecht zur späteren Stator- bzw. Rotorachse des Motors angeordnet ist. Im vorliegenden Fall liegt diese Wicklungsebene innerhalb der Papierebene der Figur. Nachdem wie dargestellt drei verschiedene Wicklungen hergestellt wurden, können nochmals hierzu in einem Winkelversatz von 60 Grad weitere drei Spulen gewickelt werden, so dass sich für das spätere Statorspulenpaket insgesamt sechs Wicklungen ergeben. Alle diese Wicklungen können, sofern dies gewünscht wird, mit unterschiedlichen Formen, Wicklungszahlen, Längenverhältnissen und Schrittzahlen hergestellt werden. Gemäß der Figur sind alle Spulen gleich.

Hier kann es vorgesehen sein, dass noch vor dem eigentlichen Wicklungsvorgang der insgesamt sechs Spulenwicklungen auf dem Wickeldorn 3 eine Kontaktiereinheit 1 angeordnet wird, wobei die jeweiligen Drahtenden 9 einer jeweiligen Spulenwicklung in entsprechende Kontaktklemmen 2 der Kontaktiereinheit 1 automatisch eingesetzt werden. Hier kann bevorzugt gegebenenfalls der Wickeldorn 3 durch eine Kontaktiereinheit 1 selbst gebildet sein.

Im unteren Teil der Figur ist es dargestellt, dass ein Formring 7 mit unterhalb des Formringes angeordneten Anlaufschrägen 7a oberhalb (mit Bezug auf die darüber dargestellte Anordnung) angeordnet wird, um sodann mittels dem Wickeldorn 3 die an den einzelnen an dem Wickeldorn 3 vorgesehenen Formstiften 4a aufgehängten Wicklungen 5 durch die innere Ausnehmung 7b des Formrings 7 hindurchzuziehen.

Hierbei löst sich z.B. automatisch eine jede Wicklung 5 von den außerhalb des Wickeldorns 3 angeordneten Formstiften 4b, so dass eine jede der dargestellten Wicklungen 5 mit Bezug auf die Papierebene in der dargestellten Figur nach unten wegklappen kann, so dass sie sich mit Bezug auf den unteren Bereich der Figur 1 auf die spätere Achse A des Stators bzw. des einzusetzenden Rotors zubewegt. Hierbei können die insgesamt sechs gewickelten Spulen 5 einander zumindest teilweise überlappen. Es ist anzumerken, dass dieses Ausführungsbeispiel nicht auf die Herstellung von insgesamt sechs Spulenwicklungen 5 beschränkt ist, sondern beliebige Anzahlen von Spulenwicklungen hergestellt werden können.

Gemäß der hier dargestellten Ausführung ist es ergänzend vorgesehen, dass ein Formdorn 8 mit Bezug auf die obere Darstellung in der Figur 1 unterhalb des Wickeldorns angeordnet wird, so dass sich die einzelnen Wicklungen 5 mit ihrer in das Innere der Statorwicklung gerichteten Seite an den Formdorn 8 anlegen können. Der Formdorn 8 bildet somit beim Formzug eine innere Begrenzung, die einen späteren Raum für den einzusetzenden Rotor des Motors freihält. Hier kann es wie oben erwähnt vorgesehen sein, dass der Formdorn als Spalttopf/Spaltrohr ausgebildet ist, der nach der Herstellung der Luftspaltwicklung in dieser verbleibt.

Nachdem der Formring 7 in Pfeilrichtung P1 über den Wickeldorn 3 und gegebenenfalls den Formdorn 8 herübergeschoben wurde bzw. der Formdorn 8 oder Wickeldorn 3 durch den Formring 7 in Richtung des Pfeiles P2 durchgezogen wurde und hierdurch die Form der Stator-Wicklung hergestellt wurde, kann die Fixierung der Stator-Wicklung beispielsweise durch einen Verbackungsprozess durchgeführt werden.

Schon vor dieser Fixierung oder gegebenenfalls auch nach der Fixierung können der gegebenenfalls eingesetzte Formdorn und/oder der Wicklungsdorn bzw. sofern statt eines Wicklungsdorns eine Kontaktiereinheit eingesetzt wurde, die Formstifte aus der Stator-Wicklung herausgezogen werden.

## Patentansprüche

1. Verfahren zur Herstellung einer eisenlosen Stator-Wicklung mit mehreren Spulenwicklungen (5) für, insbesondere bürstenlose Elektromotoren, **gekennzeichnet durch** folgende Schritte:
a) jede Spulenwicklung (5) wird **durch** mehrfache Wicklung eines Drahtes in einer Ebene im wesentlichen senkrecht zur späteren Achse (A) der Stator-Wicklung um eine zumindest teilweise in/an einem Wickeldorn (3), insbesondere entfernbar angeordnete Spulenaufnahme (4) hergestellt,
b) es erfolgt ein Formzug, bei dem die gewickelten Spulen (5) mit dem Wickeldorn (3) insbesondere im wesentlichen senkrecht zur Wickelebene **durch** einen Formring (7) gezogen werden, wobei **durch** den Formring (7) die einzelnen Spulenwickel (5) in ihrer Orientierung ganz oder zumindest in einem Teilbereich umgeklappt und aufeinander zubewegt werden,
c) die so erhaltene Stator-Wicklung wird in ihrer Form fixiert.

2. Verfahren nach Anspruch 1, **dadurch gekennzeichnet, dass** vor dem Formzug die Spulenaufnahmen (4) in/an der Kontaktiereinheit/Wickeldorn (1,3), insbesondere entfernbar, angeordnet werden.

3. Verfahren nach einem der vorherigen Ansprüche, **dadurch gekennzeichnet, dass** während des Formzuges in Zugrichtung hinter dem Wickeldorn (3) ein Formdorn (8) angeordnet ist, um den herum die Spulenwickel (5) beim Formzug angeordnet werden, insbesondere wobei der Formdorn (8) koaxial über den Wickeldorn (3) geschoben wird.

4. Verfahren nach Anspruch 3, **dadurch gekennzeichnet, dass** der Formdorn (8) durch einen im Motor einzusetzenden Spalttopf gebildet wird, insbesondere der in der Stator-Wicklung verbleibt.

5. Verfahren nach einem der vorherigen Ansprüche, **dadurch gekennzeichnet, dass** vor und/oder nach dem Wickeln einer Spule (5) die Drahtenden des Spulendrahtes automatisch in eine Kontaktiereinheit (1) eingelegt werden, die insbesondere auf dem Wickeldorn (3) angeordnet ist.

6. Verfahren nach einem der vorherigen Ansprüche, **dadurch gekennzeichnet, dass** die Kontaktiereinheit (1) selbst den Wickeldorn (3) bildet und insbesondere nach dem Formzug in der Stator-Wicklung verbleibt.

7. Verfahren nach einem der vorherigen Ansprüche, **dadurch gekennzeichnet, dass** durch unterschiedliche Spulenaufnahmen/Formstifte (4) innerhalb einer Statorwicklung Spulen (5) mit unterschiedlichen Schrittweiten, Formen und/oder Längenverhältnissen hergestellt werden.

8. Verfahren nach einem der vorherigen Ansprüche, **dadurch gekennzeichnet, dass** nach dem Formzug der Formdorn (8) und/oder der Wickeldorn (3) und/oder die Spulenaufnahmen (4) aus der gefertigten Stator-Wicklung herausgezogen wird, insbesondere vor oder nach der Fixierung der Stator-Wicklung.

9. Verfahren nach einem der vorherigen Ansprüche, **dadurch gekennzeichnet, dass** während des Wicklungsvorganges eines als Sensor dienende Spule gewickelt und zusammen mit den Stator-Spulen (5) in Form gezogen wird.

10. Verwendung einer Kontaktiereinheit (1) zur Aufnahme von Drahtenden mehrerer Stator-Spulenwicklungen (5) als Wickeldorn (3), mittels dem mehrere Stator-Spulenwicklungen (5) durch einen Formring (7) in eine gewünschte Stator-Wicklungsform ziehbar sind.

11. Vorrichtung zur Herstellung einer eisenlosen Stator-Wicklung umfassend einen Wickeldorn (3), um den herum mehrere Spulenwicklungen (5) im wesentlichen in einer Ebene senkrecht zur späteren Achse (A) der Stator-Wicklung wickelbar sind und einen Formring (7), wobei durch eine Relativbewegung zwischen Formring (7) und Wickeldorn (3) der Wickeldorn (3) durch den Formring (7) ziehbar ist, wodurch die einzelnen Spulenwickel (5) in ihrer Orientierung ganz oder zumindest in einem Teilbereich umklappbar und aufeinander zubewegbar sind.
